# EUROPEAN PATENT APPLICATION

(11) **EP 1 684 113 A1**
(43) Date of publication of application: **26.07.2006**
(21) Application number: 04792728.0
(22) Date of filing: 14.10.2004
(51) Int. Cl.: G03B 21/14

(54) **LIGHTING DEVICE AND PROJECTOR**

(30) Priority: 14.10.2003 JP 2003353648
(71) Applicant: SEIKO EPSON CORPORATION, Shinjuku-ku, Tokyo 163-0811 (JP)
(72) Inventor: AKIYAMA, Koichi, c/o Seiko Epson Corporation, Suwa-shi, Nagano 392-8502 (JP); YANO, Kunihiko, c/o Seiko Epson Corporation, Suwa-shi, Nagano 392-8502 (JP); HASHIZUME, Toshiaki, c/o Seiko Epson Corporation, Suwa-shi, Nagano 392-8502 (JP)
(74) Representative: HOFFMANN EITLE
(86) International application number: PCT/JP2004/015578
(87) International publication number: WO 2005/036256

(57) **Abstract**

An illumination device of the invention is an illumination device 100A including an ellipsoidal reflector 130, an arc tube 120, a sub-mirror 122, and a parallelizing lens 140A, which is **characterized in that** on a light incident-surface 140Ai of the parallelizing lens 140A is formed a reflection reducing layer 142A optimized to match with a light, which is, of the lights emitted from a luminescent center P of the arc tube 120, a light that is emitted toward the ellipsoidal reflector at any angle of 60° to 80° with respect to an illumination optical axis 110Aax and goes incident on the light incident-surface 140Ai of the parallelizing lens 140A after the light is reflected on the ellipsoidal reflector 130.

The illumination device of the invention is thus able to further improve efficiency of light utilization as well as further reduce unwanted stray lights by further reducing overall reflectance of the light incident-surface or the light exiting-surface of the parallelizing lens.

A projector of the invention, by including the illumination device capable of further improving efficiency of light utilization as well as further reducing unwanted stray lights, serves as a high-intensity, high-quality projector.

## Description

### Technical Field

The present invention relates to an illumination device and a projector.

### Background Art

Generally, a projector includes an illumination device to emit illumination lights, an electro-optic modulation device to modulate illumination lights from the illumination device according to image information, and a projection system to project modulated lights from the electro-optic modulation device for a projection image to be displayed. For such a projector, an illumination device using an ellipsoidal reflector has been proposed as an illumination device capable of reducing the projector in size (for example, see JP-A-2000-347293 (FIG. 15)).

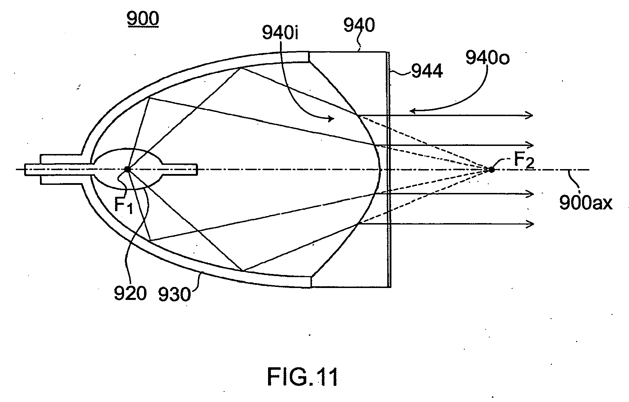

FIG. 11 is a view used to describe an illumination device 900 in the related art. As is shown in FIG. 11, the illumination device 900 includes an ellipsoidal reflector 930, an arc tube 920 disposed in close proximity to one focal point F₁ of the ellipsoidal reflector 930, and a parallelizing lens 940 to make lights from the ellipsoidal reflector 930 substantially parallel.

The illumination device 900 configured in this manner is able to collect lights from the arc tube 920 at the ellipsoidal reflector 930 and then change the collected lights into substantially parallel lights in the parallelizing lens 940 to be emitted toward an optical system in the latter stage. This makes it possible to reduce the optical system in the latter stage in size, which can in turn reduce the projector in size.

Incidentally, in the illumination device 900 in the related art, a UV-ray reflection layer 944 is formed on the light exiting-surface 940o of the parallelizing lens 940. UV rays emitted from the arc tube 920 are thus reflected on the UV-ray reflection layer 944 and return to the inside of the ellipsoidal reflector 930. It is thus possible to prevent UV rays from emitting from the illumination device 900.

Meanwhile, a anti reflection coating (not shown) to reduce reflectance of visible lights is formed on the light incident-surface 940i of the parallelizing lens 940. The anti reflection coating is configured to achieve the lowest reflectance with respect to lights parallel to an illumination optical axis 900ax in effectively using all the lights emitted from the arc tube to go incident on the parallelizing lens.

### Disclosure of the Invention

However, in a case where the size of the ellipsoidal reflector is set to a size large enough to cover the end portion on the illuminated region side of the arc tube as is in the illumination device 900 in the related art, a collection angle of beams collected toward a second focal point of the ellipsoidal reflector becomes larger, which increases a range of incident angles of lights that come incident on the light incident-surface of the parallelizing lens. For this reason, to adopt a anti reflection coating configured to achieve the lowest reflectance with respect to lights parallel to the illumination optical axis as in the related art is not necessarily adequate means for reducing overall reflectance of the light incident-surface of the parallelizing lens. This raises a problem that efficiency of light utilization is reduced further and it is not easy to further reduce unwanted stray lights. This problem is a problem occurring not only on the light incident-surface of the parallelizing lens, but also on the light exiting-surface of the parallelizing lens.

The invention was devised to solve such a problem, and therefore has an object to provide an illumination device capable of further improving efficiency of light utilization as well as further reducing unwanted stray lights by further reducing overall reflectance of the light incident-surface or the light exiting-surface of the parallelizing lens. The invention also has an object to provide a high-intensity, high-quality projector equipped with such an illumination device.

The inventors conducted assiduous studies to achieve the above objects, and completed the invention when they discovered that the objects of the invention can be achieved by using a sub-mirror to reflect lights, emitted from the arc tube toward the illuminated region, to the ellipsoidal reflector in the illumination device, and by forming a specific anti reflection coating on the light incident-surface or the light exiting-surface of the parallelizing lens.

An illumination device of the invention is an illumination device, including: an ellipsoidal reflector; an arc tube disposed in close proximity to one focal point of the ellipsoidal reflector; a sub-mirror, disposed on an illuminated region side of the arc tube, to reflect lights, emitted from the arc tube toward the illuminated region, to the ellipsoidal reflector; and a parallelizing lens to make lights from the ellipsoidal reflector substantially parallel.
The illumination device is characterized in that on a light incident-surface of the parallelizing lens is formed a reflection reducing layer optimized to match with an incident light at a specific angle, which is, of lights emitted from a luminescent center of the arc tube, a light that is emitted toward the ellipsoidal reflector at any angle of 60° to 80° with respect to an illumination optical axis and goes incident on the light incident-surface of the parallelizing lens after the light is reflected on the ellipsoidal reflector.

Because the illumination device of the invention includes the sub-mirror to reflect lights, emitted from the arc tube toward the illuminated region, to the ellipsoidal reflector, it is possible to reduce a collection angle of beams collected from the ellipsoidal reflector toward the second focal point of the ellipsoidal reflector. As a result, a range of angles of lights that go incident on the light incident-surface of the parallelizing lens can be reduced, which makes it easier to optimize the anti reflection coating used to reduce overall reflectance of the light-incidence surface of the parallelizing lens.

Although it will be described in detail in the "Best Mode for Carrying Out the Invention" column below, analysis by the inventors reveals that, in the illumination device using the sub-mirror, of the lights emitted from the luminescent center of the arc tube, intensity of lights emitted toward the ellipsoidal reflector at an angle of 60° to 80° with respect to the illumination optical axis is higher than intensity of lights emitted at an angle in other ranges. This means that light intensity of the incident light at the specific angle, which is emitted from the arc tube at the angle of 60° to 80° to go incident on the parallelizing lens, is higher than light intensity of lights that go incident on the light incident-surface of the parallelizing lens at other incident angles.

Hence, in the illumination device of the invention, the anti reflection coating is optimized to match with the incident light at the specific angle. The illumination device of the invention is thus able to further reduce overall reflectance of the light incident-surface of the parallelizing lens by reducing reflectance of the light incident-surface of the parallelizing lens for the incident light at the specific angle having high light intensity. Hence, not only is it possible to further improve efficiency of light utilization, but it is also possible to further reduce unwanted stray lights.

In addition, the illumination device of the invention, by including the sub-mirror to reflect lights, emitted from the arc tube toward the illuminated region, to the ellipsoidal reflector, can achieve advantages as follows. That is, it is not necessary to set the size of the ellipsoidal reflector to a size large enough to cover the end portion on the illuminated region side of the arc tube, and the ellipsoidal reflector can be reduced in size, which can in turn reduce the illumination device in size. Also, by enabling the ellipsoidal reflector to be reduced in size, it is possible to reduce a collection angle of beams collected from the ellipsoidal reflector toward the second focal point of the ellipsoidal reflector and the diameter of a beam spot. This enables the parallelizing lens to be reduced further in size.

For the illumination device of the invention, it is preferable that the parallelizing lens is formed of a concave lens whose light incident-surface is a concave surface, and an angle produced between the incident light at the specific angle and a normal to the light incident-surface of the parallelizing lens is 30° to 50°.

Analysis by the inventors reveals that, in the illumination device using the sub-mirror, when the incident light at the specific angle goes incident on the light incident-surface of the parallelizing lens, an angle produced between the incident light at the specific angle and the normal to the light incident-surface of the parallelizing lens is about 40° in a case where the light incident-surface of the parallelizing lens is a concave surface (for example, a hyperboloid of revolution). Hence, by setting this angle to 30° to 50° by allowing for a predetermined margin, it is possible to further reduce overall reflectance of the light incident-surface of the parallelizing lens.

Also, for the illumination device of the invention, it is preferable that the parallelizing lens is formed of a concave lens whose light incident-surface is a flat surface and whose light exiting-surface is a concave surface, and an angle produced between the incident light at the specific angle and a normal to the light incident-surface of the parallelizing lens is 0° to 20°.

Analysis by the inventors reveals that, in the illumination device using the sub-mirror, when the incident light at the specific angle goes incident on the light incident-surface of the parallelizing lens, an angle produced between the incident light at the specific angle and the normal to the light incident-surface of the parallelizing lens is about 10° in a case where the light incident-surface of the parallelizing lens is a flat surface and the light exiting-surface thereof is a concave surface (for example, an ellipsoid of revolution). Hence, by setting this angle to 0° to 20° by allowing for a predetermined margin, it is possible to further reduce overall reflectance of the light incident-surface of the parallelizing lens.

Another illumination device of the invention is an illumination device, including: an ellipsoidal reflector; an arc tube disposed in close proximity to one focal point of the ellipsoidal reflector; a sub-mirror, disposed on an illuminated region side of the arc tube, to reflect lights, emitted from the arc tube toward the illuminated region, to the ellipsoidal reflector; and a parallelizing lens to make lights from the ellipsoidal reflector substantially parallel.

Another illumination device is characterized in that on a light exiting-surface of the parallelizing lens is formed a reflection reducing layer optimized to match with an exiting light at a specific angle, which is, of lights emitted from a luminescent center of the arc tube, a light that is emitted toward the ellipsoidal reflector at any angle of 60° to 80° with respect to an illumination optical axis and exits from the light exiting-surface of the parallelizing lens by passing through the parallelizing lens after the light is reflected on the ellipsoidal reflector.

Because another illumination device of the invention includes the sub-mirror to reflect lights, emitted from the arc tube toward the illuminated region, to the ellipsoidal reflector, it is possible to reduce a collection angle of beams collected from the ellipsoidal reflector toward the second focal point of the ellipsoidal reflector. As a result, a range of angles of lights that go incident on the light incident-surface of the parallelizing lens can be reduced, which makes it easier to optimize the anti reflection coating used to reduce overall reflectance of the light-incidence surface of the parallelizing lens.

Also, as has been described, in the illumination device using the sub-mirror, of the lights emitted from the luminescent center of the arc tube, intensity of lights emitted toward the ellipsoidal reflector at an angle of 60° to 80° with respect to the illumination optical axis is higher than intensity of lights emitted at an angle in other ranges. This means that light intensity of the exiting light at the specific angle, which is emitted from the arc tube at the angle of 60° to 80° to go incident on the parallelizing lens and exit from the light exiting-surface of the parallelizing lens, is higher than light intensity of lights that exit from the light exiting-surface of the parallelizing lens at other exiting angles.

Hence, in another illumination device of the invention, the anti reflection coating is optimized to match with the exiting light at the specific angle. Another illumination device of the invention is thus able to further reduce overall reflectance of the light exiting-surface of the parallelizing lens by reducing reflectance of the light exiting-surface of the parallelizing lens for the exiting light at the specific angle having high light intensity. Hence, not only is it possible to further improve efficiency of light utilization, but it is also possible to further reduce unwanted stray lights.

In addition, another illumination device of the invention, by including the sub-mirror to reflect lights, emitted from the arc tube toward the illuminated region, to the ellipsoidal reflector, can achieve advantages as follows. That is, it is not necessary to set the size of the ellipsoidal reflector to a size large enough to cover the end portion on the illuminated region side of the arc tube, and the ellipsoidal reflector can be reduced in size, which can in turn reduce the illumination device in size. Also, by enabling the ellipsoidal reflector to be reduced in size, it is possible to reduce a collection angle of beams collected from the ellipsoidal reflector toward the second focal point of the ellipsoidal reflector and the diameter of a beam spot. This enables the parallelizing lens to be reduced further in size.

For another illumination device of the invention, it is preferable that the parallelizing lens is formed of a concave lens whose light incident-surface is a flat surface and whose light exiting-surface is a concave surface, and an angle produced between the exiting light at the specific angle and a normal to the light exiting-surface of the parallelizing lens is 30° to 50°.

Analysis by the inventors reveals that, in the illumination device using the sub-mirror, when the exiting light at the specific angle exits from the light exiting-surface of the parallelizing lens, an angle produced between the exiting light at the specific angle and the normal to the light exiting-surface of the parallelizing lens is about 40° in a case where the light incident-surface of the parallelizing lens is a flat surface and the light exiting-surface thereof is a concave surface (for example, an ellipsoid of revolution). Hence, by setting this angle to 30° to 50° by allowing for a predetermined margin, it is possible to further reduce overall reflectance of the light exiting-surface of the parallelizing lens.

For the illumination device of the invention or another illumination device of the invention, it is preferable that the anti reflection coating is formed of a dielectric multi-layer coating having heat resistance to 300°C or higher.

Because the parallelizing lens is disposed in close proximity to the arc tube and the ellipsoidal reflector, it reaches a temperature as high as 300°C by heat from the arc tube and the ellipsoidal reflector. Hence, it is preferable that the anti reflection coating formed on the parallelizing lens is formed of a dielectric multi-layer coating having heat resistance to 300°C or higher.

For the illumination device of the invention or another illumination device of the invention, it is preferable that the dielectric multi-layer coating is formed of a laminated film made of SiO₂ serving as a low refractive film and TiO₂ and/or Ta₂O₅ serving as a high refractive film.

When configured in this manner, heat resistance to 300°C or higher can be achieved. As the laminated film made of SiO₂ serving as a low refractive film and TiO₂ and/or Ta₂O₅ serving as a high refractive film, a laminated film made of SiO₂ serving as a low refractive film and Ta₂O₅ serving as a high refractive film, or a laminated film made of SiO₂ serving as a low refractive film and TiO₂ and Ta₂O₅ serving as a high refractive film can be used suitably.

For the illumination device of the invention or another illumination device of the invention, it is preferable that a base material of the parallelizing lens is borosilicate glass or vitreous silica.

When configured in this manner, optical performances and heat resistance needed for a parallelizing lens can be obtained.

A projector of the invention is a projector, including: the illumination device of the invention or another illumination device of the invention; an electro-optic modulation device to modulate illumination lights from the illumination device according to an image signal; and a projection system to project lights modulated in the electro-optic modulation device.

Hence, the projector of the invention, by including the illumination device capable of further improving efficiency of light utilization as well as further reducing unwanted stray lights, serves as a high-intensity, high-quality projector.

### Brief Description of the Drawings

FIG. 1 is a view showing an illumination device 110A according to a first embodiment;
FIG. 2 is a view showing intensity distributions of lights emitted from the luminescent center P of an arc tube 120;
FIG. 3 is a view showing light distribution characteristics of an arc tube 920 in an illumination device 900 in the related art;
FIG. 4 is a view showing the configuration of a anti reflection coating 142A;
FIG. 5 is a view showing reflection characteristics of the anti reflection coating 142A;
FIG. 6 is a view showing the configuration of another anti reflection coating 142A;
FIG. 7 is a view showing reflection characteristics of another anti reflection coating 142A;
FIG. 8 is a view showing an optical system in a projector 1A according to the first embodiment;
FIG. 9 is a view showing an illumination device 110B according to a second embodiment;
FIG. 10 is a view showing an illumination device 110C according to a third embodiment; and
FIG. 11 is a view showing an illumination device 900 in the related art.

### Best Mode for Carrying Out the Invention

An illumination device and a projector of the invention will now be described by way of embodiments shown in the drawings.

### (First Embodiment)

An illumination device and a projector according to a first embodiment will be described first.

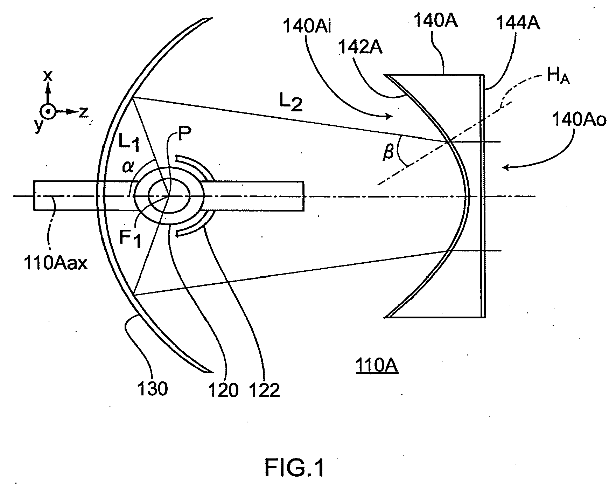

FIG. 1 is a view used to describe an illumination device 110A according to the first embodiment. As is shown in FIG. 1, the illumination device 110A according to the first embodiment includes: an ellipsoidal reflector 130; an arc tube 120 disposed in close proximity to one focal point F₁ of the ellipsoidal reflector 130; a sub-mirror 122, disposed on the illuminated region side of the arc tube 120, to reflect lights, emitted from the arc tube 120 toward the illuminated region, to the ellipsoidal reflector 130; and a parallelizing lens 140A to make lights from the ellipsoidal reflector 130 substantially parallel.

On the light incident-surface 140Ai of the parallelizing lens 140A is formed a anti reflection coating 142A optimized to match with an incident light L₂ at a specific angle, which is, of the lights emitted from the luminescent center P of the arc tube 120, a light L₁ that is emitted toward the ellipsoidal reflector 130 at any angle of 60° to 80° with respect to the illumination optical axis 110Aax and goes incident on the light incident-surface 140Ai of the parallelizing lens 140A after it is reflected on the ellipsoidal reflector 130. A UV-ray reflection layer 144A is formed on the light exiting-surface 140Ao of the parallelizing lens 140A.

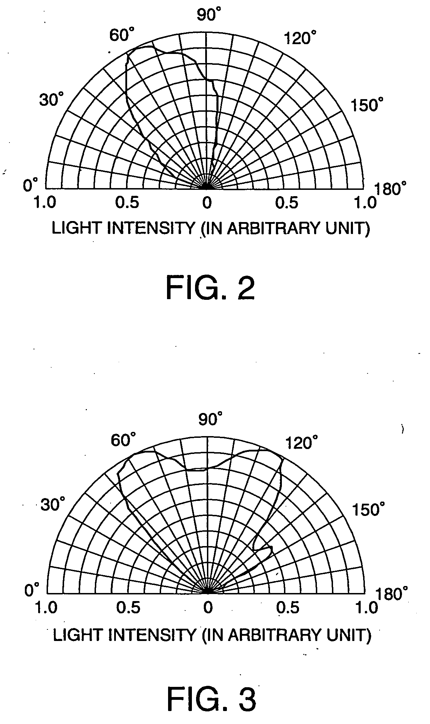

FIG. 2 is a view showing intensity distributions of lights emitted from the luminescent center P of the arc tube 120 to which the sub-mirror 122 is attached. FIG. 3 is a view showing light distribution characteristics of an arc tube 920 to which no sub-mirror is attached in the illumination device 900 in the related art. Referring to FIG. 2 and FIG. 3, of the angles produced between lights emitted from the luminescent center P of the arc tube 120/920 and the illumination optical axis 110Aax/910ax, the axes in the circumferential direction indicate angles measured from the ellipsoidal reflector 130/930 side. The axes in the radial direction indicate light intensity.

As is obvious from FIG. 2 and FIG. 3, because the illumination device 110A according to the first embodiment includes the sub-mirror 122 to reflect lights, emitted from the arc tube 120 toward the illuminated region, to the ellipsoidal reflector 130, substantially no light is emitted from the luminescent center P toward the ellipsoidal reflector 130 at an angle of 100° or greater with respect to the illumination optical axis 110ax. It is thus possible to reduce a collection angle of beams collected from the ellipsoidal reflector 130 toward the second focal point F₂ of the ellipsoidal reflector. As a result, a range of angles of lights that go incident on the light incident-surface 140Ai of the parallelizing lens 140A can be reduced, which makes it easier to optimize the anti reflection coating 142A used to reduce overall reflectance of the light-incidence surface 140Ai of the parallelizing lens 140A.

Analysis by the inventors reveals that, in the illumination device using the sub-mirror 122, as is shown in FIG. 2, of the lights emitted from the luminescent center P of the arc tube 120, intensity of lights emitted toward the ellipsoidal reflector 130 at an angle of 60° to 80° with respect to the illumination optical axis 110Aax is higher than intensity of lights emitted at an angle in other ranges. This means that light intensity of the incident light L₂ at the specific angle is higher than light intensity of lights that go incident on the other portions of the light incident-surface 140Ai of the parallelizing lens 140A.

Hence, in the illumination device 110A according to the first embodiment, the anti reflection coating 142A is optimized to match with the incident light L₂ at the specific angle. The illumination device 110A according to the first embodiment is thus able to further reduce overall reflectance of the light incident-surface 140Ai of the parallelizing lens 140A. Hence, not only is it possible to further improve efficiency of light utilization, but it is also possible to further reduce unwanted stray lights.

In addition, the illumination device 110A according to the first embodiment, by including the sub-mirror 122 to reflect lights, emitted from the arc tube 120 toward the illuminated region, to the ellipsoidal reflector 130, can achieve advantages as follows. That is, it is not necessary to set the size of the ellipsoidal reflector 130 to a size large enough to cover the end portion on the illuminated region side of the arc tube 120, and the ellipsoidal reflector 130 can be reduced in size, which can in turn reduce the illumination device 110A in size. Also, by enabling the ellipsoidal reflector 130 to be reduced in size, it is possible to reduce a collection angle of beams collected from the ellipsoidal reflector 130 toward the second focal point F₂ of the ellipsoidal reflector 130 and the diameter of a beam spot. This enables the parallelizing lens 140A to be reduced further in size.

In the illumination device 110A according to the first embodiment, the parallelizing lens 140A comprises a concave lens whose light incident-surface 140Ai is a hyperboloid of revolution and whose light exiting-surface is a flat surface. Analysis by the inventors reveals that, in a case where the parallelizing lens 140A configured in this manner is used, when the incident light L₂ at the specific angle goes incident on the light incident-surface 140Ai of the parallelizing lens 140A, an angle β produced between the incident light L₂ at the specific angle and the normal to the light incident-surface 140Ai of the parallelizing lens 140A is about 40°. This being the case, for the illumination device 110A according to the first embodiment, the angle β is set to 30° to 50° by allowing for a predetermined margin. The illumination device 110A according to the first embodiment is thus able to further reduce overall reflectance of the light incident-surface 140Ai of the parallelizing lens 140A.

As "the incident light L₂ at the specific angle", it is preferable to use, for example, of the lights emitted from the luminescent center P of the arc tube 120, an incident light at a specific angle, which is a light emitted at an angle with the highest intensity among lights L₁ that are emitted toward the ellipsoidal reflector 130 at any angle of 60° to 80° with respect to the illumination optical axis 110Cax, and goes incident on the light incident-surface 140Ai of the parallelizing lens 140A after it is reflected on the ellipsoidal reflector 130. Also, it is preferable to use, for example, of the lights emitted from the luminescent center P of the arc tube 120, an incident light at a specific angle, which is a light emitted at the center angle (70°) among lights L₁ that are emitted toward the ellipsoidal reflector 130 at any angle of 60° to 80° with respect to the illumination optical axis 110Cax, and goes incident on the light incident-surface 140Ai of the parallelizing lens 140A after it is reflected on the ellipsoidal reflector 130.

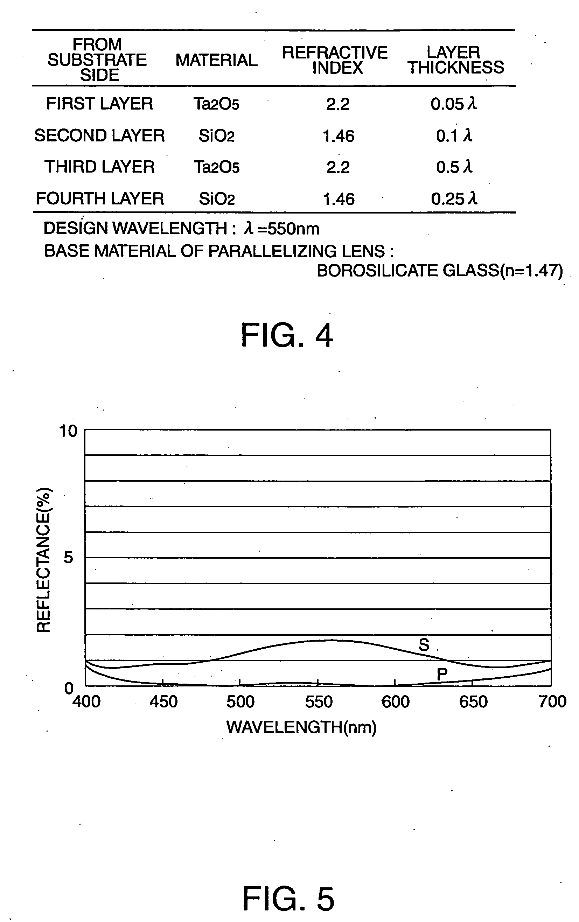

The anti reflection coating 142A is optimized so as reduce reflectance of the anti reflection coating 142A by devising the configuration of a anti reflection coating (for example, materials or the configuration of films forming the anti reflection coating). FIG. 4 is a view showing the configuration of the anti reflection coating optimized in this manner. FIG. 5 is a view showing reflection characteristics of the anti reflection coating 142A.

As is shown in FIG. 4, the anti reflection coating 142A is a dielectric multi-layer coating having four-layer structure. It comprises, from the substrate side of the parallelizing lens 140A, a first layer of Ta₂O₅ serving as a high refractive film (film thickness: 0.05λ), a second layer of SiO₂ serving as a low refractive film (film thickness: 0.1λ), a third layer of Ta₂O₅ serving as a high refractive film (film thickness: 0.5λ), and a fourth layer of SiO₂ serving as a low refractive film (film thickness: 0.25λ).

As is shown in FIG. 5, it is understood that reflectance is reduced sufficiently in the anti reflection coating 142A configured as described above with respect to lights (S-polarized light and P-polarized light) at the angle β of 40°. Hence, for the illumination device 110A according to the first embodiment, not only is it possible to further improve efficiency of light utilization, but it is also possible to further reduce unwanted stray lights.

In addition, the anti reflection coating 142A configured as described above has sufficiently high heat resistance, and it will not deteriorate even when the temperature of the light incident-surface 140Ai of the parallelizing lens 140A reaches around 300°C.

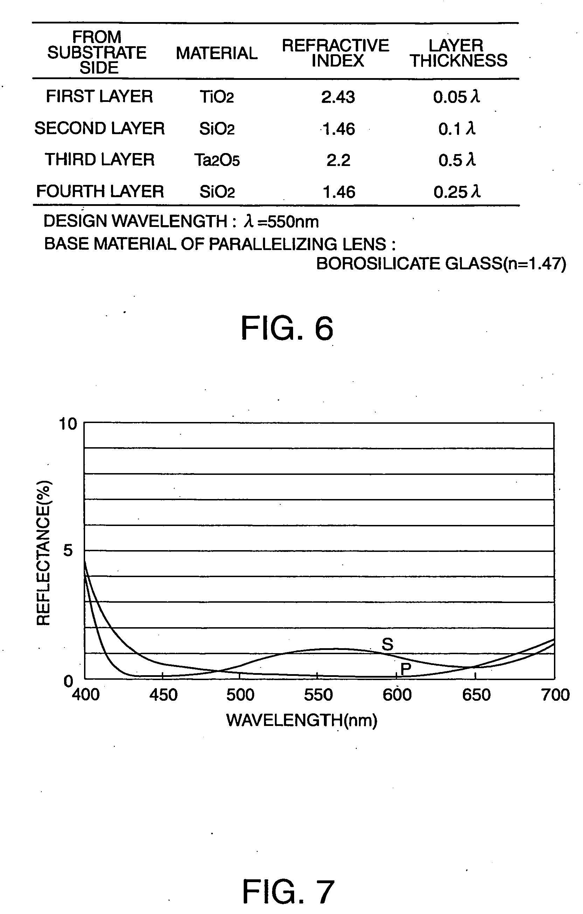

FIG. 6 is a view showing the configuration of another anti reflection coating used in the first embodiment. FIG. 7 is a view showing reflection characteristics of another anti reflection coating.

As is shown in FIG. 6, another anti reflection coating is also a dielectric multi-layer coating having a four-layer structure. It comprises, from the substrate side of the parallelizing lens 140A, a first layer of TiO₂ serving as a high refractive film (film thickness: 0.05λ), a second layer of SiO₂ serving as a low refractive film (film thickness: 0.1λ), a third layer of Ta₂O₅ serving as a high refractive film (film thickness: 0.5λ), and a fourth layer of SiO₂ serving as a low refractive film (film thickness: 0.25λ).

As is shown in FIG. 7, it is understood that reflectance is reduced sufficiently as well in another anti reflection coating configured as described above with respect to lights (S-polarized lights and P-polarized lights) at the angle β of 40°. Hence, even when another anti reflection coating configured as described above is used in the illumination device 110A according to the first embodiment instead of the anti reflection coating 142A, not only is it possible to further improve efficiency of light utilization, but it is also possible to further reduce unwanted stray lights.

In addition, another anti reflection coating configured as described above also has sufficiently high heat resistance, and it will not deteriorate even when the temperature of the light incident-surface 140Ai of the parallelizing lens 140A reaches around 300°C.

In the illumination device 110A according to the first embodiment, borosilicate glass is used as the base material of the parallelizing lens 140A. Optical performances and heat resistance needed for the parallelizing lens 140A can be thus obtained. Also, adhesion to the anti reflection coating 142A is satisfactory.

Alternatively, vitreous silica may be used as the base material of the parallelizing lens 140A instead of borosilicate glass. In this case, heat resistance is increased further.

A projector 1A according to the first embodiment will now be described.

The projector 1A according to the first embodiment is optical equipment to form an optical image by modulating lights emitted from the light source according to image information and project an enlarged optical image on a screen SCR.

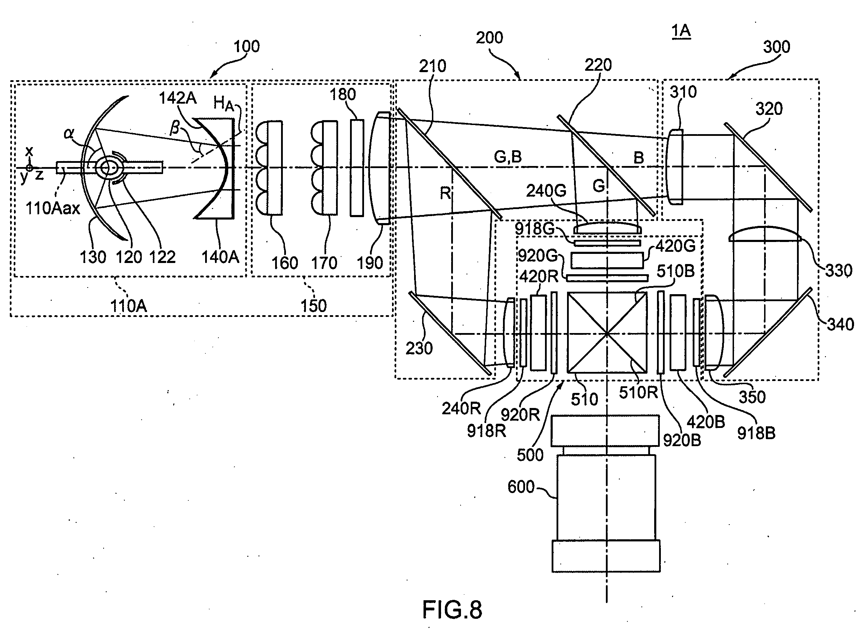

As is shown in FIG. 8, the projector 1A according to the first embodiment includes an illumination system 100, a color separation system 200, a relay system 300, an optical device 500, and a projection system 600.

The illumination system 100 includes the illumination device 110A and an optical integration system 150.

As has been described, the illumination device 110A includes the ellipsoidal reflector 130 and the arc tube 120 having its luminescent center in close proximity to one focal point F₁ of the ellipsoidal reflector 130.

The arc tube 120 includes a vessel and sealing portions extending to the both sides of the vessel. The vessel is made of vitreous silica shaped like a sphere, and includes a pair of electrodes disposed inside the vessel, and mercury, an inert gas, and a small quantity of halogen sealed inside the vessel.

The pair of electrodes inside the vessel of the arc tube 120 is to form arc images. When a voltage is applied to the pair of electrodes, a potential difference is produced between the electrodes, which gives rise to an electric discharge, thereby generating arc images.

Various types of high-intensity luminescent arc tubes can be adopted as the arc tube, and for example, a metal halide lamp, a high pressure mercury lamp, an ultra-high pressure mercury lamp, etc. can be adopted.

The ellipsoidal reflector 130 has a concave surface to emit lights emitted from the arc tube 120 after they are aligned in a constant direction. The concave surface of the ellipsoidal reflector 130 serves as a cold mirror that reflects visible lights and transmits infrared rays. The optical axis of the ellipsoidal reflector 130 agrees with the illumination optical axis 110Aax, which is the central axis of lights emitted from the illumination device 110A.

The optical integration system 150 is an optical system to make in-plane illuminance in the illumination region homogeneous by dividing respective lights emitted from the illumination device 110A into plural partial lights. The optical integrator system 150 includes a first lens array 160, a second lens array 170, a polarization conversion element 180, and a superimposing lens 190.

The first lens array 160 is furnished with a function to serve as a light dividing optical element that divides respective lights emitted from the illumination device 110A into plural partial lights, and configured to have plural small lenses aligned in a matrix fashion on the in-plane that intersects at right angles with the illumination optical axis 110Aax, which is the central axis of lights emitted from the illumination device 110A.

The second lens array 170 is an optical element to collect plural partial lights divided by the first lens array 160, and, as with the first lens array 160, is configured to have plural small lenses aligned in a matrix fashion on the in-plane that intersects at right angles with the illumination optical axis 110Aax.

The polarization conversion element 180 is a polarization conversion element to emit respective partial lights divided by the first lens array 160 as substantially one kind of linearly polarized lights whose polarization directions are aligned in the same polarization direction.

Although it is not shown in the drawing, the polarization conversion element 180 is formed by aligning a polarization separation layer and a reflection layer alternately, which are disposed with a tilt with respect to the illumination optical axis 110Aax. Of P-polarized lights and S-polarized lights contained in the respective partial lights, the polarization separation layer transmits one polarized lights, and reflects the other polarized lights. The reflected other polarized lights are bent on the reflection layer, and emitted in a direction in which one polarized lights are emitted, that is, in a direction along the illumination optical axis 110Aax. Any of the polarized lights thus emitted undergoes polarization conversion by a retardation film provided on the light exiting-surface of the polarization conversion element 180, and the polarization directions of almost all the polarized lights are aligned. By using the polarization conversion element 180 as described above, it is possible to convert lights emitted from the illumination device 110A into polarized lights in substantially one direction, which can in turn improve efficiency of utilization of lights from the light source used in the optical device 500.

The superimposing lens 190 is an optical device to collect plural partial lights that have passed through the first lens array 160, the second lens array 170, and the polarization conversion element 180 for the collected lights to be superimposed on the image forming regions in three liquid crystal devices in the optical device 500 described below.

Lights emitted from the illumination system 100 are emitted to the color separation system 200, and separated into three color lights of red (R), green (G), and blue (B) in the color separation system 200.

The color separation system 200 includes two dichroic mirrors 210 and 220, and a reflection mirror 230, and is furnished with a function of separating plural partial lights emitted from the optical integration system 150 into three color lights of red (R), green (G), and blue (B) by means of the dichroic mirrors 210 and 220.

The dichroic mirrors 210 and 220 are optical devices provided with wavelength selective films on the substrates, and each film reflects lights in a predetermined wavelength range and transmits lights in the other wavelength ranges. The dichroic mirror 210 disposed at the former stage of the optical path is a mirror that reflects red lights and transmits the other color lights. The dichroic mirror 220 disposed at the latter stage of the optical path is a mirror that reflects green lights and transmits blue lights.

The relay system 300 includes a light incident-side lens 310, a relay lens 330, and reflection mirrors 320 and 340, and is furnished with a function of leading blue lights having passed through the dichroic mirror 220 forming the color separation system 200 to the optical device 500. The reason why the relay system 300 as described above is provided in the optical path for blue lights is because the optical path length of blue lights is longer than the optical path lengths of the other color lights and there is a need to prevent a reduction in efficiency of light utilization caused by scattering of lights or the like. In the projector 1A according to the first embodiment, the configuration as described above is adopted because the optical path length of blue lights is longer. However, the optical path length of red lights may be extended to use the relay system 300 in the optical path for red lights.

Red lights separated in the dichroic mirror 210 are bent on the reflection mirror 230, after which they are fed to the optical device 500 via a field lens 240R. Also, green lights separated in the dichroic mirror 220 are fed to the optical device 500 via a field lens 240G. Further, blue lights are collected and bent by the light incident-side lens 310, the relay lens 330, and the reflection mirrors 320 and 340 forming the relay system 300, and then fed to the optical device 500 via the field lens 350. The field lenses 240R, 240G, and 350 provided at the former stages of the optical paths for respective colors in the optical device 500 are provided to convert respective partial lights emitted from the illumination system 100 into lights parallel to the illumination optical axis 110Aax.

Respective color lights thus separated are modulated according to image information in liquid crystal devices 420R, 420G, and 420B serving as electro-optic modulation devices.

The optical device 500 is to form color images by modulating incident lights according to image information. The optical device 500 includes the liquid crystal devices 420R, 420G, and 420B (a liquid crystal device on the red lights side is referred to as the liquid crystal device 420R, a liquid crystal device on the green lights side is referred to as the liquid crystal device 420G, and a liquid crystal device on the blue lights side is referred to as the liquid crystal device 420B), and the cross dichroic prism 510.

On the light incident-sides of the liquid crystal devices 420R, 420G, and 420B are disposed light incident-side polarizers 918R, 918G, and 918B, respectively, and light exiting-side polarizers 920R, 920G, and 920B are disposed on the light exiting-sides. Transmission type liquid crystal panels are used as the liquid crystal devices 420R, 420G, and 420B. Respective incident color lights undergo light modulation by the light incident-side polarizers, the liquid crystal panels, and light exiting-side polarizers.

The liquid crystal panel is formed by sealing liquid crystals, which are electro-optic substances, into a pair of transparent glass substrates hermetically, and modulates the polarization directions of polarized lights emitted from the light incident-side polarizer according to a given image signal by using, for example, a polysilicon TFT as a switching device.

Respective color lights modulated in the liquid crystal devices 420R, 420G, and 420B are combined in the cross dichroic prism 510.

The cross dichroic prism 510 forms the optical device 500 together with the liquid crystal devices 420R, 420G, and 420B, and is furnished with a function to serve as a light combining system to combine converted lights of respective colors emitted from the liquid crystal devices 420R, 420G, and 420B. It includes a red light reflection dichroic surface 510R that reflects red lights, and a blue light reflection dichroic surface 510B that reflects blue lights. The red light reflection dichroic surface 510R and the blue light reflection dichroic surface 510B are provided by forming a dielectric multi-layer coating to reflect red lights and a dielectric multi-layer coating to reflect blue lights on the interfaces of four rectangular prisms almost in the shape of a capital X. Converted lights of three colors are combined by the both reflection dichroic surfaces 510R and 510B, and a light to display a color image is generated. The combined light generated in the cross dichroic prism 510 is projected toward the projection system 600.

The projection system 600 is configured to project the combined light from the cross dichroic prism 510 to the screen SCR in the form of a display image.

As has been described, the projector 1A according to the first embodiment includes the illumination device 110A, the liquid crystal devices 420R, 420G, and 420B serving as electro-optic modulation devices to modulate illumination lights from the illumination device 110A according to image signals, and the projection system 600 to project lights modulated in the liquid crystal devices 420R, 420G, and 420B.

Hence, the projector 1A according to the first embodiment, by including the illumination device 110A capable of further improving efficiency of light utilization as well as further reducing unwanted stray lights, serves as a high-intensity, high-quality projector.

### (Second Embodiment)

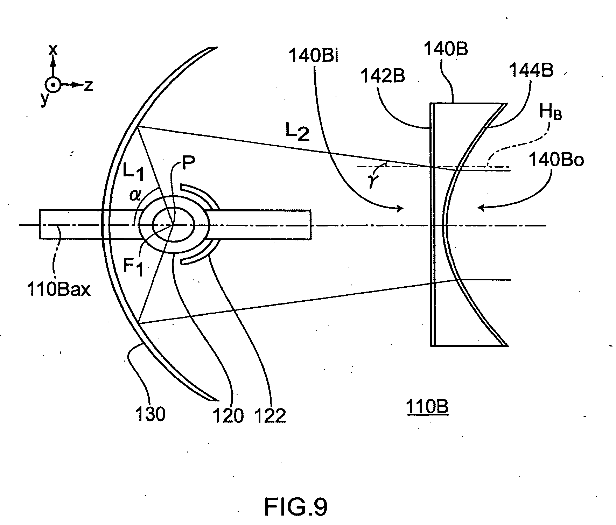

An illumination device 110B according to a second embodiment will now be described. FIG. 9 is a view used to describe the illumination device 110B according to the second embodiment.

The illumination device 110B according to the second embodiment is different from the illumination device 110A according to the first embodiment in configuration of the parallelizing lens. To be more specific, in the illumination device 110A according to the first embodiment, the parallelizing lens 140A comprises a concave lens whose light incident-surface 140Ai is a hyperboloid of revolution and whose light exiting-surface is a flat surface, whereas in the illumination device 110B according to the second embodiment, a parallelizing lens 140B comprises a concave lens whose light incident-surface 140Bi is a flat surface and whose light exiting-surface 140Bo is an ellipsoid of revolution. A UV-ray reflection layer 144B is formed on the light exiting-surface 140Bo.

As has been described, the illumination device 110B according to the second embodiment is different from the illumination device 110A according to the first embodiment in configuration of the parallelizing lens; however, as with the illumination device 110A according to the first embodiment, the illumination device 110B according to the second embodiment is also able to further reduce overall reflectance of the light incident-surface 140Bi of the parallelizing lens 140B because the anti reflection coating 142B is optimized to match with the incident light L₂ at the specific angle. Hence, not only is it possible to further improve efficiency of light utilization, but it is also possible to further reduce unwanted stray lights.

Analysis by the inventors has revealed that when the incident light L₂ at the specific angle goes incident on the light incident-surface 140Bi of the parallelizing lens 140B, an angle γ produced between the incident light L₂ at the specific angle and the normal to the light incident-surface 140Bi of the parallelizing lens 140B is about 10°. This being the case, for the illumination device 110B according to the second embodiment, the angle γ is set to 0° to 20° by allowing for a predetermined margin. The illumination device 110B according to the second embodiment is thus able to further reduce overall reflectance of the light incident-surface 140Bi of the parallelizing lens 140B.

### (Third Embodiment)

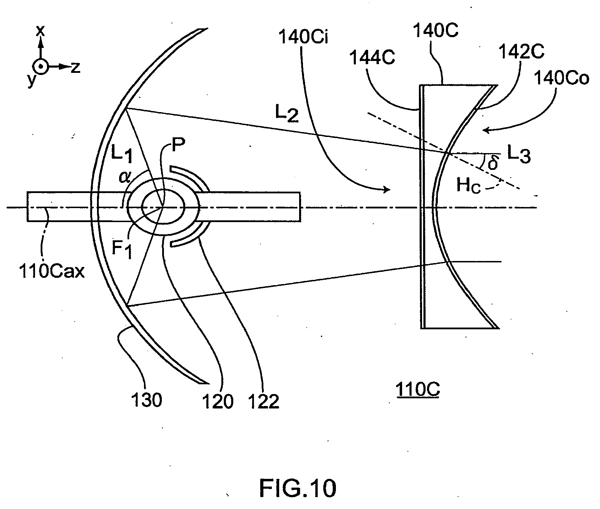

An illumination device 110C according to a third embodiment will now be described. FIG. 10 is a view used to describe the illumination device 110C according to the third embodiment.

The illumination device 110C according to the third embodiment is different from the illumination device 110B according to the second embodiment in configuration of the parallelizing lens. To be more specific, in the illumination device 110B according to the second embodiment, the anti reflection coating layer 142B is formed on the light incident-surface 140Bi of the parallelizing lens 140B and the UV-ray reflection layer 144B is formed on the light exiting-surface 140Bo, whereas in the illumination device 110C according to the third embodiment, a UV-ray reflection layer 144C is formed on the light incident-surface 140Ci of a parallelizing lens 140C and a anti reflection coating 142C is formed on the light exiting-surface 142Co.

As has been described, the illumination device 110C according to the third embodiment is different from the illumination device 110B according to the second embodiment in configuration of the parallelizing lens; however, the illumination device 110C according to the third embodiment is also able to further reduce overall reflectance of the light exiting-surface 140Co of the parallelizing lens 140C because the anti reflection coating 142C is optimized to match with an exiting light L₃ at a specific angle. Hence, not only is it possible to further improve efficiency of light utilization, but it is also possible to further reduce unwanted stray lights.

"The exiting light L₃ at the specific angle" referred to herein means an exiting light L₃ at a specific angle, which is, of the lights emitted from the luminescent center P of the arc tube 120, a light L₁ that is emitted toward the ellipsoidal reflector 130 at any angle of 60° to 80° with respect to the illumination optical axis 110Cax and exits from the light exiting-surface 140Co of the parallelizing lens 140C by passing through the parallelizing lens 140C after it is reflected on the ellipsoidal reflector 130.

Analysis by the inventors has revealed that when the exiting light L₃ at the specific angle exits from the light exiting-surface 140Co of the parallelizing lens 140C, an angle δ produced between the exiting light L₃ at the specific angle and the normal to the light exiting-surface 140Co of the parallelizing lens 140C is about 40°. This being the case, for the illumination device 110C according to the third embodiment, the angle δ is set to 30° to 50° by allowing for a predetermined margin. The illumination device 110C according to the third embodiment is thus able to further reduce overall reflectance of the light exiting-surface 140Co of the parallelizing lens 140C.

As "the exiting light L₃ at the specific angle", it is preferable to use, for example, of the lights emitted from the luminescent center P of the arc tube 120, an exiting light at a specific angle, which is a light emitted at an angle with the highest intensity among lights L₁ that are emitted toward the ellipsoidal reflector 130 at any angle of 60° to 80° with respect to the illumination optical axis 110Cax, and exits from the light exiting-surface 140Co of the parallelizing lens 140C by passing through the parallelizing lens 140C after it is reflected on the ellipsoidal reflector 130. Also, it is preferable to use, for example, of the lights emitted from the luminescent center P of the arc tube 120, an exiting light at a specific angle, which is a light emitted at the center angle (70°) among lights L₁ that are emitted toward the ellipsoidal reflector 130 at any angle of 60° to 80° with respect to the illumination optical axis 110Cax, and exits from the light exiting-surface 140Co of the parallelizing lens 140C by passing through the parallelizing lens 140C after it is reflected on the ellipsoidal reflector 130.

While the illumination device and the projector of the invention have been described by way of embodiments above, the invention is not limited to the embodiments above and can be implemented otherwise in various manners without deviating from the scope of the invention. For instances, modifications as follows are possible.

The first embodiment described a case where the illumination device of the invention is applied to a projector using three liquid crystal devices; however, the invention is not limited to this configuration. The illumination device of the invention is also applicable to a projector using a single liquid crystal device, a projector using two liquid crystal devices, or a projector using four or more liquid crystal devices.

The first embodiment described a case where the illumination device of the invention is applied to a projector using transmission type liquid crystal devices in which the light incident-surface and the light exiting-surface are different; however, the invention is not limited to this configuration. The illumination device of the invention is also applicable to a projector using transmission type liquid crystal devices in which the light incident-surface and the light exiting-surface are the same.

The first embodiment described a case where the illumination device of the invention is applied to a projector using liquid crystal devices as electro-optic modulation devices; however, the invention is not limited to this configuration. The illumination device of the invention is also applicable to a projector using micromirror modulation devices as the electro-optic modulation devices.

The first embodiment described a case where the illumination device of the invention is applied to a projector; however, the invention is not limited to this configuration. The illumination device of the invention is also applicable to other types of optical equipment.

The best mode for carrying out the invention has been described as above; however, the invention is not limited to the above description. That is to say, the invention has been chiefly illustrated and described with respect to particular embodiments; however, anyone skilled in the art may add various modifications as to the detailed configurations, such as the shape, materials, and a quantity, to the embodiments above without deviating from the technical ideas and objects of the invention.

The descriptions to limit the shape and materials as above are merely illustrative for a better understanding of the invention and are not intended to limit the invention. Descriptions with the use of names of members by removing the limitations of the shape and materials, either partially or entirely, are therefore included in the invention.

## Claims

1. An illumination device, comprising:
an ellipsoidal reflector;
an arc tube disposed in close proximity to one focal point of said ellipsoidal reflector;
a sub-mirror, disposed on an illuminated region side of said arc tube, to reflect lights, emitted from said arc tube toward the illuminated region, to said ellipsoidal reflector; and
a parallelizing lens to make lights from said ellipsoidal reflector substantially parallel,
said illumination device being **characterized in that**:
on a light incident-surface of said parallelizing lens is formed a reflection reducing layer optimized to match with an incident light at a specific angle, which is, of lights emitted from a luminescent center of said arc tube, a light that is emitted toward said ellipsoidal reflector at any angle of 60° to 80° with respect to an illumination optical axis and goes incident on the light incident-surface of said parallelizing lens after said light is reflected on said ellipsoidal reflector.

2. The illumination device according to Claim 1, wherein:
said parallelizing lens comprises a concave lens whose light incident-surface is a concave surface; and
an angle produced between said incident light at the specific angle and a normal to the light incident-surface of said parallelizing lens is 30° to 50°.

3. The illumination device according to Claim 1, wherein:
said parallelizing lens comprises a concave lens whose light incident-surface is a flat surface and whose light exiting-surface is a concave surface; and
an angle produced between said incident light at the specific angle and a normal to the light incident-surface of said parallelizing lens is 0° to 20°.

4. An illumination device, comprising:
an ellipsoidal reflector;
an arc tube disposed in close proximity to one focal point of said ellipsoidal reflector;
a sub-mirror, disposed on an illuminated region side of said arc tube, to reflect lights, emitted from said arc tube toward the illuminated region, to said ellipsoidal reflector; and
a parallelizing lens to make lights from said ellipsoidal reflector substantially parallel,
said illumination device being **characterized in that**:
on a light exiting-surface of said parallelizing lens is formed a reflection reducing layer optimized to match with an exiting light at a specific angle, which is, of lights emitted from a luminescent center of said arc tube, a light that is emitted toward said ellipsoidal reflector at any angle of 60° to 80° with respect to an illumination optical axis, and exits from the light exiting-surface of said parallelizing lens by passing through said parallelizing lens after said light is reflected on said ellipsoidal reflector.

5. The illumination device according to Claim 4, wherein:
said parallelizing lens comprises a concave lens whose light incident-surface is a flat surface and whose light exiting-surface is a concave surface; and
an angle produced between said exiting light at the specific angle and a normal to the light exiting-surface of said parallelizing lens is 30° to 50°.

6. The illumination device according to any of Claims 1 through 5, wherein:
said anti reflection coating comprises a dielectric multi-layer coating having heat resistance to 300°C or higher.

7. The illumination device according to Claim 6, wherein:
said dielectric multi-layer coating comprises a laminated film made of SiO₂ serving as a low refractive film and TiO₂ and/or Ta₂O₅ serving as a high refractive film.

8. The illumination device according to any of Claims 1 through 7, wherein:
a base material of said parallelizing lens is borosilicate glass or vitreous silica.

9. A projector, **characterized by** comprising:
the illumination device according to any of Claims 1 through 8;
an electro-optic modulation device to modulate illumination lights from said illumination device according to an image signal; and
a projection system to project lights modulated in said electro-optic modulation device.
